# EUROPEAN PATENT SPECIFICATION

(11) **EP 2 891 599 B1**
(45) Date of publication and mention of the grant of the patent: **07.06.2017**
(21) Application number: 13833685.4
(22) Date of filing: 20.08.2013
(51) Int. Cl.: B62L 1/00, B60T 8/171, B62J 99/00, B62K 23/06, B62L 3/08

(54) **TWO-WHEELED VEHICLE**
ZWEIRÄDRIGES FAHRZEUG
VÉHICULE À DEUX ROUES

(30) Priority: 29.08.2012 JP 2012189012
(43) Date of publication of application: 08.07.2015
(73) Proprietor: Honda Motor Co., Ltd., Minato-ku Tokyo 107-8556 (JP)
(72) Inventor: UCHIDA, Odai, Wako-shi Saitama 351-0193 (JP); ITO, Shinji, Wako-shi Saitama 351-0193 (JP); NAKAIE, Hirokatsu, Wako-shi Saitama 351-0193 (JP); KITA, Takehiko, Wako-shi Saitama 351-0193 (JP)
(74) Representative: Beder, Jens
(86) International application number: PCT/JP2013/072168
(87) International publication number: WO 2014/034476

(56) References cited:
- JP-A- 2000 272 572
- JP-A- 2001 063 674
- JP-A- 2002 079 974

## Description

### TECHNICAL FIELD

The present invention relates to a two-wheeled automobile that includes a front wheel brake operation element for braking a front wheel and a linked brake operation element for linking and braking the front wheel and a rear wheel.

### BACKGROUND ART

A two-wheeled automobile in which a front wheel is braked in response to operation of a front wheel brake operation element and the front wheel and a rear wheel are linked and braked in response to operation of a linked brake operation element is already known in Patent Document 1 and Patent Document 2. In an arrangement disclosed by Patent Document 1, a pair of cables individually connected to the front wheel brake operation element and the linked brake operation element are coupled in parallel to a brake arm of a single drum brake fitted on the front wheel, and in an arrangement disclosed by Patent Document 2, a disk brake provided with a three pot caliper having a single pot connected to a first master cylinder outputting fluid pressure in response to operation of the front wheel brake operation element and a pair of pots connected to a second master cylinder outputting fluid pressure in response to operation of the linked brake operation element is fitted on the front wheel.

### RELATED ART DOCUMENTS

### PATENT DOCUMENTS

Patent Document 1: Japanese Patent Application Laid-open No. 2010-149685
Patent Document 2: Japanese Patent Application Laid-open No. 2010-185501

A two-wheeled automobile comprising a disk and a drum brake for a rear wheel is for instance known from JP2001063674A.

### SUMMARY OF THE INVENTION

### PROBLEMS TO BE SOLVED BY THE INVENTION

In recent years, from the viewpoint of merchandise appeal, for a two-wheeled automobile there has been a demand to employ the disk brake disclosed by Patent Document 2 rather than the drum brake disclosed by Patent Document 1, but since a disk brake having a three pot caliper is relatively expensive, there has been a desire for the development of a linked brake system in which a front wheel is braked by means of two independent systems, that is, a front wheel brake operation element and a linked brake operation element, with an inexpensive arrangement that does not use an expensive three pot caliper.

The present invention has been accomplished in light of such circumstances, and it is an object thereof to provide a two-wheeled automobile that enables a linked brake system to be arranged at low cost while employing a disk brake for braking the front wheel.

### MEANS FOR SOLVING THE PROBLEMS

In order to attain the above object, according to the present invention, there is provided a two-wheeled automobile comprising a front wheel brake operation element for braking a front wheel and a linked brake operation element for linking and braking the front wheel and a rear wheel, characterized in that the front wheel is fitted with a disk brake that actuates in response to operation of the front wheel brake operation element and a drum brake that actuates in response to operation of the linked brake operation element such that the disk brake is disposed on one side in a vehicle width direction and a brake drum of the drum brake opens on the one side in the vehicle width direction, and a brake panel of the drum brake is disposed in a radially inward direction of a brake disk of the disk brake.

Further, according to the present invention one end part of an anchor pin is embedded in the brake panel such that one end face of the anchor pin is disposed further inward in the vehicle width direction than the brake disk, and an outer end face of a camshaft support portion provided on the brake panel in order to pivotably support a camshaft is disposed further inward in the vehicle width direction than the brake disk.

According to a first preferred embodiment of the present invention, a recess part having a circular cross section is provided in a middle part of a wheel hub of the front wheel so as to be coaxial with an axle, the recess part being for forming part of the wheel hub as the brake drum, and a labyrinth passage formed between the brake drum and an outer periphery of the brake panel is disposed within the recess part.

Moreover, according to a second preferred embodiment of the present invention, a wheel speed sensor is disposed on the side opposite to the disk brake and the drum brake in the vehicle width direction.

A right brake lever 21 of an embodiment corresponds to the front wheel brake operation element of the present invention, and a left brake lever 23 of the embodiment correspond to the linked brake operation element of the present invention.

### EFFECTS OF THE INVENTION

In accordance with the present invention, since the front wheel is fitted with the disk brake that actuates in response to operation of the front wheel brake operation element and the drum brake that actuates in response to operation of the linked brake operation element, the linked brake system can be arranged without using an expensive three pot caliper and, moreover, maintenance of the disk brake and the drum brake can be carried out on the same side in the vehicle width direction, ease of maintenance can be improved, and due to the brake panel being disposed in the radially inward direction of the brake disk it is possible to make the brake panel inconspicuous from the outside, thus enabling an excellent design to be achieved.

Furthermore, in accordance with the present invention, since one end face of the anchor pin having one end part embedded in the brake panel is disposed further inward in the vehicle width direction than the brake disk, the anchor pin can be disposed yet closer to the vehicle body center in the vehicle width direction, and a force acting on the wheel when braking the front wheel by actuation of the drum brake can be received by a region closer to the vehicle body center. Moreover, since the outer end face of the camshaft support portion provided on the brake panel is disposed further inward in the vehicle width direction than the brake disk, it is possible to make the camshaft inconspicuous from the outside, thus improving the appearance.

In accordance with the first preferred embodiment of the present invention, since the labyrinth passage formed between the brake drum and the outer periphery of the brake panel is disposed within the recess part provided in the middle part of the wheel hub, it is possible to prevent more effectively rainwater, etc. from entering the brake drum.

In accordance with the second preferred embodiment of the present invention, since the wheel speed is disposed on the side opposite to the disk brake and the drum brake in the vehicle width direction, it is possible to make the wheel speed sensor resistant to the influence of abraded powder generated in the disk brake and the drum brake and, moreover, it is possible to reduce restrictions on wiring from the wheel speed sensor

### BRIEF DESCRIPTION OF DRAWINGS

FIG. 1 is a left side view of a two-wheeled automobile. (first embodiment)
FIG. 2 is a diagram showing the arrangement of a brake device. (first embodiment)
FIG. 3 is a sectional view along line 3-3 in FIG. 1. (first embodiment)

### EXPLANATION OF REFERENCE NUMERALS AND SYMBOLS

- 21: Right brake lever, which is a front wheel brake operation element
- 23: Left brake lever, which is a linked brake operation element
- 25a: Wheel hub
- 30: Disk brake
- 31: Drum brake
- 38: Brake disk
- 51: Brake drum
- 52: Brake panel
- 52a: Camshaft support portion
- 52b: Outer end face of camshaft support portion
- 54: Recess part
- 58: Labyrinth passage
- 59: Anchor pin
- 60: Camshaft
- 64: Wheel speed sensor
- WF: Front wheel
- WR: Rear wheel

### MODE FOR CARRYING OUT THE INVENTION

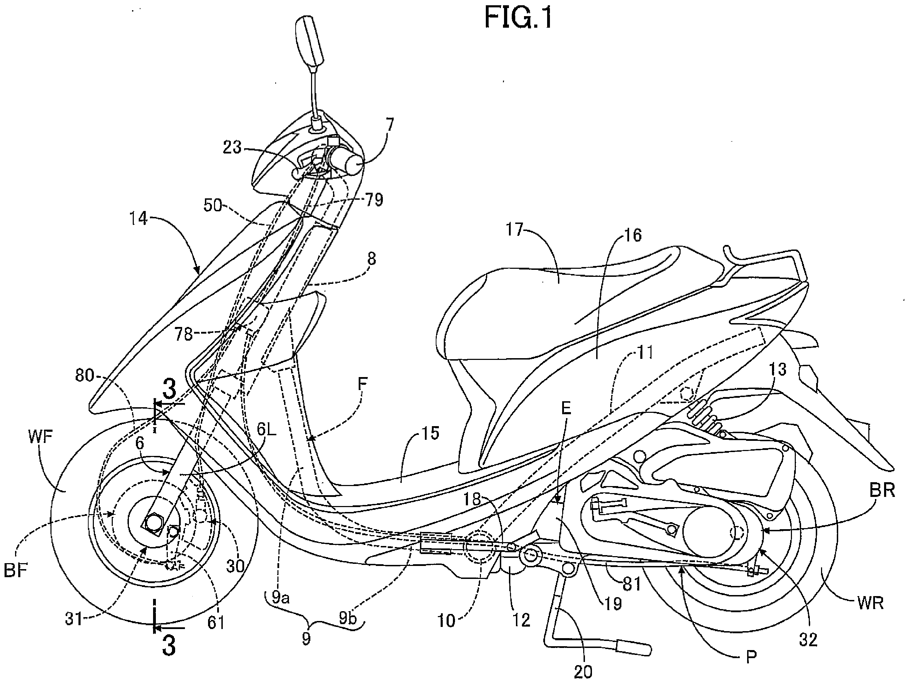

A mode for carrying out the present invention is explained by reference to the attached FIG. 1 to FIG. 3; in the explanation below, front-and-rear, left-and-right, and up-and-down refer to directions when viewed by an occupant riding on a two-wheeled automobile.

### FIRST EMBODIMENT

First, in FIG. 1, a vehicle body frame F of a scooter type two-wheeled automobile includes a head pipe 8 steerably supporting a front fork 6 that axially supports a front wheel WF and bar-shaped handlebars 7 that are linked to the front fork 6, a down tube 9 having an inclined portion 9a extending downwardly to the rear from the head pipe 8 and a horizontal portion 9b extending rearwardly from the lower end of the inclined portion 9a, a cross member 10 extending in the vehicle width direction and fixed to the rear end of the down tube 9, and a pair of left and right rear frame pipes 11 having front ends fixed to left and right sides of the cross member 10 and extending upwardly to the rear.

A bracket 12 is provided on front end parts of the rear frame pipes 11, a front part of a power unit P formed from an internal combustion engine E and a transmission (not illustrated) provided between the internal combustion engine E and a rear wheel WR is vertically swingably supported on the bracket 12 via a link, which is not illustrated, and the rear wheel WR disposed on the rear right side of the power unit P is axially supported on a rear part of the power unit P. Furthermore, a rear cushion 13 is provided between the power unit P and rear parts of the rear frame pipes 11 in the vehicle body frame F.

The vehicle body frame F is covered by a vehicle body cover 14 made of a synthetic resin, part of the vehicle body cover 14 forms a step floor 15 for the feet of an occupant to be placed on and a frame body cover 16 connected to the step floor 15 and covering a vehicle body rear part from opposite sides, and a tandem type riding seat 17 is provided on the frame body 16.

A side stand 18 is pivotably mounted on the rear left side of the horizontal portion 9b of the down tube 9 of the vehicle body frame F. Furthermore, a main stand 20 is pivotably mounted on an engine main body 19 of the internal combustion engine E forming part of the power unit P.

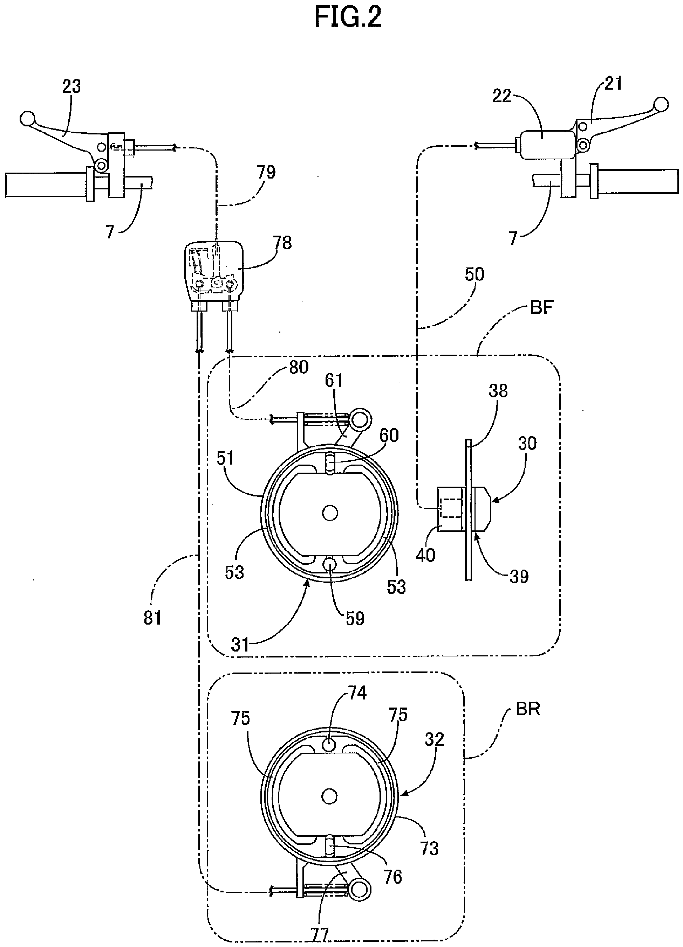

In FIG. 2, a right brake lever 21, which is a front wheel brake operation element for braking the front wheel WF, is pivotably mounted on a right end part of the handlebars 7, and a master cylinder 22 that outputs fluid pressure in response to a pivoting operation of the right brake lever 21 is also mounted thereon. Furthermore, a left brake lever 23, which is a linked brake operation element for linking and braking the front wheel WF and the rear wheel WR, is pivotably mounted on a left end part of the handlebars 7.

A front wheel brake device BF for braking the front wheel WF is formed from a disk brake 30 that actuates in response to a pivoting operation of the right brake lever 21 and a drum brake 31 that actuates in response to a pivoting operation of the left brake lever 23, and a rear wheel brake device BR for braking the rear wheel WR is formed from a drum brake 32 that actuates in response to a pivoting operation of the left brake lever 23.

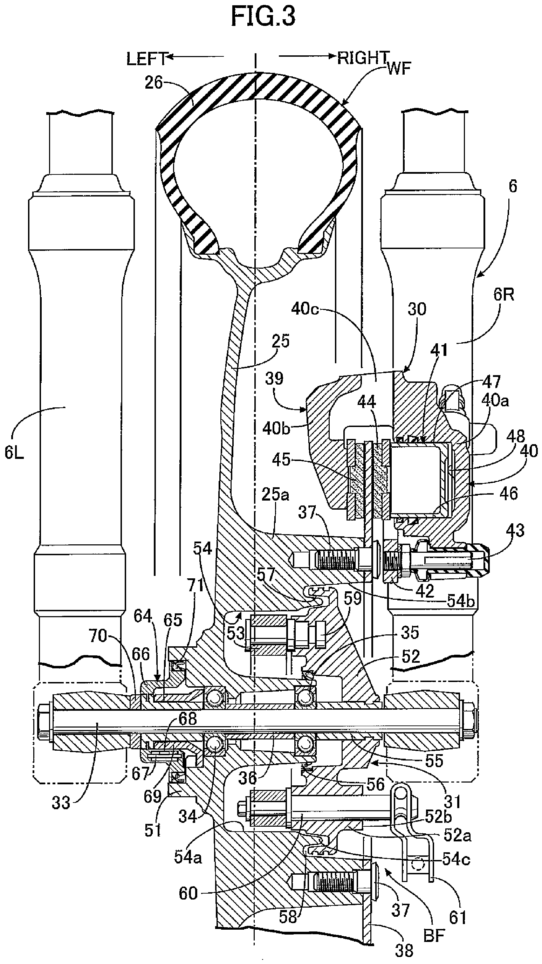

Referring in addition to FIG. 3, the front wheel WF is formed by fitting a tire 26 on the outer periphery of a wheel 25. The front fork 6 includes a left leg portion 6L disposed on the left side of the front wheel WF and a right leg portion 6R disposed on the right side of the front wheel WF, and opposite end parts of an axle 33 extending through a wheel hub 25a of the wheel 25 are fixed between lower end parts of the left leg portion 6L and the right leg portion 6R. A ball bearing 34 is disposed between the inner periphery on the left side of the wheel hub 25a and the outer periphery of the axle 33, a ball bearing 35 is disposed between the inner periphery on the right side of the wheel hub 25a and the outer periphery of the axle 33, and a cylindrical spacer 36 coaxially surrounding the axle 33 is disposed between inner races of the two ball bearings 34 and 35.

The disk brake 30 and drum brake 31 are fitted on the front wheel WF such that the disk brake 30 is disposed on one side in the vehicle width direction (in this embodiment the right side) and a brake drum 51 of the drum brake 31 opens on the one side in the vehicle width direction.

The disk brake 30 includes a brake disk 38 that rotates together with the front wheel WF and a caliper 39 disposed so as to straddle the outer periphery of the brake disk 38. The brake disk 38 is secured to a right side face of the wheel hub 25a of the wheel 25 by means of a plurality of bolts 37. The caliper 39 is formed by providing a braking cylinder 41 having an axis parallel to the rotational axis of the brake disk 38, that is, the rotational axis of the front wheel WF, on a caliper body 40, which is disposed so as to straddle the brake disk 38.

The caliper body 40 is formed from an action portion 40a and a reaction portion 40b disposed on opposite sides of the brake disk 38, and a bridging portion 40c straddling the brake disk 38 so as to link the action portion 40a and the reaction portion 40b, the caliper body 40 being slidably supported on a bracket 42, which is provided on a lower part of the right leg portion 6R of the front fork 6, via a pair of sliding pins 43 extending in parallel to the rotational axis of the front wheel WF.

Friction pads 44 and 45 are disposed respectively between the action portion 40a and the brake disk 38 and between the reaction portion 40b and the brake disk 38. The braking cylinder 41 is provided on the action portion 40a of the caliper body 40, and a braking piston 47 is slidably fitted into a bottomed cylinder hole 46 provided in the action portion 40a so as to open on the friction pad 44 side.

A hydraulic chamber 48 is formed between the braking piston 47 and the action portion 40a of the caliper body 40, and a hose 50 guiding fluid pressure from the master cylinder 22 (see FIG. 1 and FIG. 2) is connected to the action portion 40a of the caliper body 40 so as to communicate with the hydraulic chamber 48.

Furthermore, the drum brake 31 includes the brake drum 51, which opens on the disk brake 30 side, a brake panel 52 relatively rotatably supported on the axle 33 so as to close the open end of the brake drum 51, and a pair of brake shoes 53 and 53 pivotably supported on the brake panel 52 so as to come into sliding contact with the brake drum 51.

The brake drum 51 is formed from part of the wheel hub 25a, a recess part 54 having a circular cross section for forming brake drum 51 being provided in a middle part of the wheel hub 25a so as to be coaxial with the axle 33. This recess part 54 has a small diameter portion 54a having one end thereof closed and a large diameter portion 54b formed so as to have a larger diameter than that of the small diameter portion 54a, coaxially connected to the other end part of the small diameter portion 54a, and opening toward the disk brake 30 side. An annular projecting portion 54c is provided in a part where the small diameter portion 54a and the large diameter portion 54b are connected, the projecting portion 54c projecting slightly from the small diameter portion 54a side toward the large diameter portion 54b side so as to form a peripheral edge of the open end of the brake drum 51.

A cylindrical member 55 coaxially surrounding the axle 33 is mold bonded to the brake panel 52, and due to this cylindrical member 55 being sandwiched between the right leg portion 6LR of the front fork 6 and the inner race of the ball bearing 35 disposed between the inner periphery on the right side of the wheel hub 25a and the outer periphery of the axle 33, the brake panel 52 is fixed to the right leg portion 6R of the front fork 6 so as to be positioned in the radially inward direction of the brake disk 38 of the disk brake 30, and an annular seal member 56 is disposed between an inner peripheral part of the brake panel 52 and the wheel hub 25a.

Furthermore, the outer periphery of the brake panel 52 is provided with an annular groove 57, into which is inserted the peripheral edge of the open end of the brake drum 51, that is, the annular projecting portion 54c, and a labyrinth passage 58 for suppressing the entrance of rainwater, dirt, or dust from the outside is formed between the brake panel 52 and the brake drum 51, this labyrinth passage 58 being disposed within the recess part 54.

End parts of the pair of brake shoes 53 are pivotably supported by the brake panel 52 via an anchor pin 59, and one end part of the anchor pin 59 is embedded in the brake panel 52 such that an end face of the one end part is disposed further inward in the vehicle width direction than the brake disk 38.

The other ends of the brake shoes 53 abut against a camshaft 60 extending through a camshaft support portion 52a provided on the brake panel 52 and pivotably supported by the cam support portion 52a, an outer end face 52b of the camshaft support portion 52a being disposed further inward in the vehicle width direction than the brake disk 38.

A base end part of a brake arm 61 is fixed to the camshaft 60 on the outer side of the brake panel 52, and due to the brake arm 61 and the camshaft 60 pivoting, the brake shoes 53 come into frictional contact with an inner face of the brake drum 51, that is, an inner peripheral face of the small diameter portion 54a of the recess part 54, thus braking the front wheel WF.

A wheel speed sensor 64 is disposed on the side opposite to the disk brake 30 and the drum brake 31 in the vehicle width direction. The wheel speed sensor 64 includes a housing 66 made of a synthetic resin mold bonded to a cylindrical member 65 made of a metal and having the axle 33 inserted therethrough, a circuit board 67 housed in and fixed to the housing 66 so as to be disposed in the radially outward direction of the cylindrical member 65, a magnetic transducer element 68 mounted on the circuit board 67, and a cylindrical magnet 69 relatively rotatably inserted into the housing 66 while coaxially surrounding the cylindrical member 65.

The housing 66 is fixed to the left leg portion 6L of the front fork 6 by sandwiching the cylindrical member 65 and a cylindrical spacer 70 between the left leg portion 6L and the inner race of the ball bearing 34 disposed between the left inner periphery of the wheel hub 25a and the outer periphery of the axle 33 so that the spacer 70, which coaxially surrounds the axle 33, is disposed between the left leg portion 6L and the cylindrical member 65, and an annular seal member 71 is disposed between the housing 66 and the wheel hub 25a.

The magnet 69 is fixed to the wheel hub 25a so as to be disposed further outwardly in the vehicle width direction than the ball bearing 34 disposed between the inner periphery on the left side of the wheel hub 25a and the outer periphery of the axle 33, and rotates together with the front wheel WF.

In accordance with the wheel speed sensor 64, the rotational speed of the front wheel WF can be detected by detecting by means of the magnetic transducer element 68 a change in the magnetic pole accompanying rotation of the magnet 69 together with the front wheel WF.

Referring to FIG. 2, the drum brake 32 fitted on the rear wheel WR includes, as in the drum brake 31, a brake drum 73 rotating together with the rear wheel WR, a brake panel (not illustrated) closing the open end of the brake drum 73, a pair of brake shoes 75 and 75 having end parts pivotably supported on the brake panel via an anchor pin 74 so as to be in sliding contact with the brake drum 73, and a camshaft 76 pivotably support on the brake panel with the other ends of the brake shoes 75 abutting thereagainst, a base end part of a brake arm 77 being fixed to the camshaft 76.

The operating force due to the left brake lever 23 is inputted via a brake cable 79 to an equalizer 78 disposed beneath the handlebars 7 and supported on the head pipe 8 or an equalizer supported on the handlebars 7, and the operating force branches from the equalizer 78 to the front wheel WF side and the rear wheel WR side. A front wheel brake cable 80 for transmitting the operating force branching from the equalizer 76 to the front wheel WF side is linked to the extremity of the brake arm 61 of the drum brake 30 of the front wheel WF, and a rear wheel brake cable 81 for transmitting the operating force branching from the equalizer 78 to the rear wheel WR side is linked to the extremity of the brake arm 77 of the drum brake 31 of the rear wheel WR.

The operation of this embodiment is now explained; since the disk brake 30, which actuates in response to operation of the right brake lever 21, and the drum brake 31, which actuates in response to operation of the left brake lever 23, are fitted on the front wheel WF such that the disk brake 30 is disposed on one side in the vehicle width direction (the right side in this embodiment) and the brake drum 51 of the drum brake 31 opens on the one side in the vehicle width direction, the linked brake system can be arranged without using an expensive three pot caliper and, moreover, since maintenance of the disk brake 30 and the drum brake 31 can be carried out on the same side in the vehicle width direction, the ease of maintenance can be improved.

Furthermore, since the brake panel 52 of the drum brake 31 is disposed in the radially inward direction of the brake disk 38 of the disk brake 30, it is possible to make the brake panel 52 inconspicuous from the outside, thus enabling an excellent design to be achieved.

Moreover, since one end part of the anchor pin 59 is embedded in the brake panel 52 such that one end face of the anchor pin 59 is disposed further inward in the vehicle width direction than the brake disk 38, the anchor pin 59 can be disposed yet closer to the vehicle body center in the vehicle width direction, and a force acting on the wheel 25 when braking the front wheel WF by actuation of the drum brake 31 can be received by a region closer to the vehicle body center.

Furthermore, since the outer end face 52b of the camshaft support portion 52a provided on the brake panel 52 in order to pivotably support the camshaft 60 is disposed further inward in the vehicle width direction than the brake disk 38, it is possible to make the camshaft 60 inconspicuous from the outside, thus improving the appearance.

Moreover, since the recess part 54, having a circular cross section, for forming part of the wheel hub 25a as the brake drum 51 is provided in the middle part of the wheel hub 25a of the front wheel WF so as to be coaxial with the axle 33, and the labyrinth passage 58 formed between the brake drum 51 and the outer periphery of the brake panel 52 is disposed within the recess part 54, it is possible to prevent effectively rainwater, etc. from entering the brake drum 51.

Furthermore, since the wheel speed sensor 64 is disposed on the side opposite to the disk brake 30 and the drum brake 31 of the front wheel WF in the vehicle width direction, it is possible to make the wheel speed sensor 64 resistant to the influence of abraded powder generated in the disk brake 30 and the drum brake 31 and, moreover, it is possible to reduce restrictions on wiring from the wheel speed sensor 64.

An embodiment of the present invention is explained above, but the present invention is not limited to the embodiment above and may be modified in a variety of ways as long as the modifications do not depart from the scope of the invention laid down in the appended claims.

## Claims

1. A two-wheeled automobile comprising
a front wheel brake operation element (21) for braking a front wheel (WF) and
a linked brake operation element (23) for linking and braking the front wheel (WF) and
a rear wheel (WR),
wherein the front wheel (WF) is fitted with
a disk brake (30) that actuates in response to operation of the front wheel brake operation element (21) and
a drum brake (31) that actuates in response to operation of the linked brake operation element (23) such that the disk brake (30) is disposed on one side in a vehicle width direction and a brake drum (51) of the drum brake (31) opens on the one side in the vehicle width direction,
a brake panel (52) of the drum brake (31) is disposed in a radially inward direction of a brake disk (38) of the disk brake (30),
one end part of an anchor pin (59) is embedded in the brake panel (52) such that one end face of the anchor pin (59) is disposed further inward in the vehicle width direction than the brake disk (38), and
an outer end face (52b) of a camshaft support portion (52a) provided on the brake panel (52) in order to pivotably support a camshaft (60) is disposed further inward in the vehicle width direction than the brake disk (38).

2. The two-wheeled automobile according to Claim 1, wherein
a recess part (54) having a circular cross section is provided in a middle part of a wheel hub (25a) of the front wheel (WF) so as to be coaxial with an axle (33),
the recess part (54) being for forming part of the wheel hub (25a) as the brake drum (51), and
a labyrinth passage (58) formed between the brake drum (51) and an outer periphery of the brake panel (52) is disposed within the recess part (54).

3. The two-wheeled automobile according to Claim 1 or 2, wherein
a wheel speed sensor (64) is disposed on the side opposite to the disk brake (30) and the drum brake (31) in the vehicle width direction.

## Patentansprüche

1. Zweirädriges Fahrzeug, umfassend
ein Vorderradbremsen-Betätigungselement (21) zum Bremsen eines Vorderrads (WF) und
ein verbundenes Bremsen-Betätigungselement (23) zum Verbinden mit und Bremsen des Vorderrads (WF) und
ein Hinterrad (WR),
wobei das Vorderrad (WF) ausgerüstet ist mit
einer Scheibenbremse (30), die in Reaktion auf eine Betätigung des Vorderradbremsen-Betätigungselements (21) aktiviert wird, und
mit einer Trommelbremse (31), die in Reaktion auf eine Betätigung des verbundenen Bremsen-Betätigungselements (23) aktiviert wird, so dass die Scheibenbremse (30) in einer Fahrzeugbreitenrichtung an einer Seite angeordnet ist und eine Bremstrommel (51) der Trommelbremse (31) sich zu der einen Seite in der Fahrzeugbreitenrichtung hin öffnet,
eine Bremsenträgerplatte (52) der Trommelbremse (31) in einer Richtung radial einwärts der Bremsscheibe (38) der Scheibenbremse (30) angeordnet ist,
ein Endteil eines Ankerstifts (59) so in die Bremsenträgerplatte (52) eingelassen ist, dass eine Endfläche des Ankerstifts (59) in der Fahrzeugbreitenrichtung weiter einwärts angeordnet ist als die Bremsscheibe (38) und
eine äußere Endfläche (52b) eines Nockenwellenträgerabschnitts (52a), der an der Bremsenträgerplatte (52) vorgesehen ist, um eine Nockenwelle (60) drehbar zu halten,
weiter nach innen in der Fahrzeugbreitenrichtung angeordnet ist als die Bremsscheibe (38).

2. Zweirädriges Fahrzeug gemäß Anspruch 1,
wobei ein ausgenommenes Teil (54) einen kreisförmigen Querschnitt hat und in einem mittleren Teil der Radnabe (25) des Vorderrads (WF) so vorgesehen ist, dass es koaxial mit einer Achse (33) ist,
der ausgenommene Teil (54) einen Teil der Radnabe (25a) als Bremstrommel (51) bildet und
eine Labyrinthpassage (58), die zwischen der Bremstrommel (51) und einer äußeren Umgebung der Bremsenträgerplatte (52) gebildet ist, innerhalb des ausgeschnittenen Teils (54) angeordnet ist.

3. Zweirädriges Fahrzeug gemäß Anspruch 1 oder 2, wobei
ein Raddrehzahlsensor (64) in der Fahrzeugbreitenrichtung an einer Seite gegenüberliegend der Scheibenbremse (30) und der Trommelbremse (31) angeordnet ist.

## Revendications

1. Automobile à deux roues comprenant
un élément de commande de frein de roue avant (21) pour freiner une roue avant (WF) et
un élément de commande de frein relié (23) pour relier et freiner la roue avant (WF) et
une roue arrière (WR),
dans laquelle la roue avant (WF) est équipée avec
un frein à disque (30) qui fonctionne en réponse à l'actionnement de l'élément de commande de frein de roue avant (21) et
un frein à tambour (31) qui fonctionne en réponse à l'actionnement de l'élément de commande de frein relié (23) de sorte que le frein à disque (30) est disposé sur un côté dans la direction de la largeur du véhicule et qu'un tambour de frein (51) du frein à tambour (31) s'ouvre sur le un côté dans le sens de la largeur du véhicule,
un panneau de frein (52) du frein à tambour (31) est disposé dans un sens radialement vers l'intérieur d'un disque de frein (38) du frein à disque (30),
une partie d'extrémité d'une goupille de fixation (59) est encastrée dans le panneau de frein (52) de sorte qu'une face d'extrémité de la goupille de fixation (59) est disposée davantage vers l'intérieur dans la direction de la largeur du véhicule que le disque de frein (38), et
une face d'extrémité externe (52b) d'une partie de support d'arbre à cames (52a) prévue sur le panneau de frein (52) afin de supporter, de manière pivotante, un arbre à cames (60), est disposée davantage vers l'intérieur dans la direction de la largeur du véhicule que le disque de frein (38).

2. Automobile à deux roues selon la revendication 1, dans laquelle :
une partie d'évidement (54) ayant une section transversale circulaire est prévue dans une partie centrale d'un moyeu de roue (25a) de la roue avant (WF) afin d'être coaxiale avec un essieu (33),
la partie d'évidement (54) étant prévue pour faire partie du moyeu de roue (25a) en tant que tambour de frein (51), et
un passage labyrinthique (58) formé entre le tambour de frein (51) et une périphérie externe du panneau de frein (52) est disposé à l'intérieur de la partie d'évidement (54).

3. Automobile à deux roues selon la revendication 1 ou 2, dans laquelle
un capteur de vitesse de roue (64) est disposé sur le côté opposé au frein à disque (30) et au frein à tambour (31) dans la direction de la largeur du véhicule.
